# FASCICULE DE BREVET EUROPEEN

(11) **EP 0 558 386 B1**
(45) Date de publication et mention de la délivrance du brevet: **15.01.1997**
(21) Numéro de dépôt: 93400428.4
(22) Date de dépôt: 18.02.1993
(51) Int. Cl.: B01D 9/00

(54) **Appareil de cristallisation par évaporation perfectionné**
Verbesserte Vorrichtung zur Kristallisation durch Verdampfung
Improved apparatus for crystallization by evaporation

(30) Priorité: 26.02.1992 FR 9202249
(43) Date de publication de la demande: 01.09.1993
(73) Titulaire: F C B, 93107 Montreuil Cédex (FR)
(72) Inventeur: Giorgi, Jean-Claude, F-59100 Roubaix (FR)
(74) Mandataire: Fontanié, Etienne

(56) Documents cités:
- DE-C- 375 612
- DE-C- 703 148
- GB-A- 342 942
- E Hugot, "LA SUCRERIE DE CANNES", Troisième édition, Technique et Documentation Lavoisier, Paris, Chapitre 33 Cuite, Appareils à circulation mécanique, Pages 624-629.

## Description

La présente invention a trait aux appareils de cristallisation par évaporation destinés à la production de cristaux d'un corps soluble à partir d'une solution de ce corps. Ces appareils sont notamment utilisés en sucrerie et raffinerie de sucre.

Ces appareils sont constitués par une cuve fermée, généralement cylindrique et à axe vertical, équipée d'un faisceau d'éléments chauffants -tubes ou plaques creuses- disposé dans la partie inférieure de la cuve, et d'un agitateur, constitué par une hélice ou une roue à aubes, placé au bas d'un puits central ménagé dans le faisceau, les tubes ou les espaces entre les plaques du faisceau constituant des passages pour la circulation ascendante du produit en cours de cristallisation. De tels appareils sont décrits, par exemple, dans le livre "La sucrerie de cannes" de E. HUGOT - 3ème édition - Chapitre 33 Cuite - Appareils à circulation mécaniques - pages 624 à 629.

Le but de la présente invention est d'améliorer le circuit hydraulique de ce type d'appareil pour réduire les pertes de charge et, par conséquent, la consommation énergétique du moteur entraînant l'agitateur, améliorer les échanges thermiques entre la masse en cours de cristallisation et les éléments chauffants et éviter la création de zones mortes où la masse en cours de cristallisation pourrait stagner avec des risques d'encrassement des surfaces bordant ces zones et production d'une masse-cuite peu homogène.

L'appareil objet de l'invention est défini dans la revendication 1. Les revendications dépendantes définissent des constructions préférées - Cet appareil est caractérisé en ce qu'il comporte un caisson creux, à section annulaire, placé au centre du faisceau d'éléments chauffants et dont la paroi intérieure délimite le puits central, la hauteur de ce caisson étant au plus égale à la hauteur des éléments chauffants qui en sont les plus proches, et son épaisseur (distance radiale entre ses parois intérieure et extérieure) étant nettement supérieure à la dimension des éléments chauffants comptée suivant un rayon du faisceau. Les extrémités du caisson seront convenablement profilées pour améliorer l'écoulement de la masse en cours de cristallisation à l'entrée et à la sortie du puits central. Le caisson pourra être chauffé par de la vapeur, comme le faisceau d'éléments chauffants.

L'emploi de ce caisson permet d'éviter que la circulation à grande vitesse de la masse en cours de cristallisation à la sortie du puits central crée à l'entrée des passages, ménagés dans le faisceau pour la circulation de la masse en cours de cristallisation, qui sont les plus proches du puits central, une dépression s'opposant à la circulation naturelle, ascendante de la masse en cours de cristallisation.

Selon une autre caractéristique de l'invention, les éléments chauffants sont constitués par des corps annulaires, à paroi creuse, disposés verticalement et concentriquement de telle sorte que leurs bords supérieurs soient situés à des niveaux décroissant de la périphérie vers le centre du faisceau, et la dénivellation h entre le bord supérieur de l'élément chauffant extérieur et celui de l'élément chauffant intérieur est comprise entre 0,2 D^{2/3} et D^{2/3}, D étant le diamètre du puits central et D et h étant exprimés en mètres.

Cette construction de faisceau permet d'éviter une baisse du niveau de la masse en cours de cristallisation dans le puits central pouvant aller jusqu'à la vidange complète du puits, au début de l'opération, lorsque la hauteur de masse en cours de cristallisation au-dessus du faisceau est faible, tout en disposant pendant cette période d'une surface chauffante maximale.

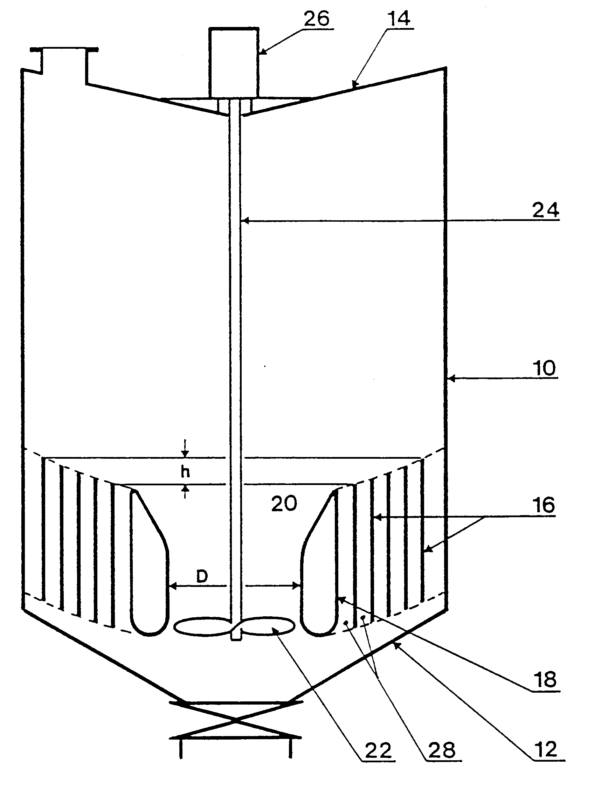

La description qui suit se réfère au dessin l'accompagnant qui montre, à titre d'exemple non limitatif, une forme de réalisation de l'invention.

L'unique figure de ce dessin est une représentation schématique, en coupe verticale, d'un appareil de cristallisation conforme à l'invention.

Cet appareil est constitué par une cuve cylindrique 10 à axe vertical fermée par un fond tronconique 12 et un couvercle 14. Un faisceau d'éléments chauffants 16 est placé dans la partie inférieure de la cuve. Les éléments chauffants sont constitués par des corps annulaires, à parois creuses, de diamètres différents, disposés concentriquement et dont l'axe commun est confondu avec l'axe de la cuve. Ils sont raccordés, par des tuyauteries non représentées, à une alimentation en vapeur; des moyens d'évacuation des condensats et d'extraction des gaz incondensables sont également prévus. Ces moyens sont classiques et bien connus des spécialistes.

Les bords supérieurs des éléments chauffants 16 sont situés à des niveaux qui décroissent de la périphérie vers le centre du faisceau. La dénivellation h, exprimée en mètre, entre le bord supérieur de l'élément chauffant extérieur, de plus grand diamètre, et celui de l'élément chauffant intérieur, de plus petit diamètre, est comprise entre O,2 D^{2/3} et D^{2/3}, D étant le diamètre du puits central 20 du faisceau exprimé en mètres. Le profil en coupe du haut du faisceau peut être constitué par deux segments de droite symétriques ou par deux arcs d'une courbe quelconque, symétrique par rapport à l'axe du faisceau, comme représenté sur la figure.

Dans l'exemple représenté, tous les éléments 16 ont la même hauteur : de sorte que le profil en coupe du bas du faisceau est le même que celui du haut. Les éléments chauffants pourraient avoir des hauteurs différentes et les profils du haut et du bas du faisceau seraient alors différents. Dans tous les cas, le profil du bas du faisceau et la pente du fond 12 de la cuve pourront être choisis pour optimiser l'écoulement de la masse en cours de cristallisation sous le faisceau.

Un caisson creux 18, à section annulaire, est placé au centre du faisceau, coaxialement à celui-ci. Ses extrémités qui se trouvent approximativement au même niveau que les extrémités respectives de l'élément chauffant intérieur, ou, légèrement au-dessous , sont profilées pour améliorer l'écoulement de la masse en cours de cristallisation à l'entrée et à la sortie du puits central 20.

Son épaisseur (distance radiale entre ses parois intérieure et extérieure) est nettement supérieure à celle des éléments chauffants 16. Par exemple, les éléments chauffants pourront avoir une épaisseur de 50 mm et le caisson une épaisseur de 300 mm. Ce caisson peut être raccordé, comme les éléments chauffants, à une tuyauterie d'alimentation en vapeur et à des tuyauteries d'évacuation des condensats et d'extraction des gaz incondensables. La dénivellation h sera alors comptée entre le bord supérieur de l'élément chauffant extérieur et celui du caisson 18.

Un agitateur à hélice 22 monté à l'extrémité inférieure d'un arbre vertical 24 entraîné par un moteur 26 est placé à la sortie du puits central.

L'appareil décrit ci-dessus peut être utilisé, en particulier, pour la cristallisation du sucre, soit comme une chaudière à cuire à marche discontinue, soit comme élément d'un appareil à marche continue.

En cours de cristallisation, la liqueur-mère et les cristaux circulent de bas en haut entre les éléments chauffants puis redescendent sous le faisceau par le puits central. Ce mouvement qui est engendré par l'ébullition produite par la chaleur cédée par les éléments chauffants est accéléré par l'agitateur 22. La forme particulière du haut du faisceau permet d'éviter que le puits central se vide, sous l'action de l'agitateur 22, lorsque la hauteur de masse en cours de cristallisation au-dessus du faisceau est faible, par exemple au démarrage d'une cuite discontinue, tout en conduisant à un rapport surface chauffante/volume de la masse en cours de cristallisation maximal.

En éloignant la sortie du puits central, où la vitesse de la masse en cours de cristallisation est maximale, de l'entrée des plus proches passages 28 entre éléments chauffants, le caisson 18 permet d'éviter que se crée à l'entrée de ces passages une dépression qui contrarierait le mouvement ascendant de la masse. Il est bien évident que le caisson peut aussi être associé à un faisceau à tubes.

Il est bien évident que le caisson 18 peut aussi être associé à un faisceau à tubes.

## Revendications

1. Appareil de cristallisation par évaporation comportant une cuve fermée, à axe vertical, un faisceau d'éléments chauffants disposé dans la partie inférieure de la cuve et comportant des passages (28) pour la circulation ascendante du produit en cours de cristallisation, et un agitateur placé au bas d'un puits central ménagé dans le faisceau, caractérisé en ce qu'il comporte un caisson creux (18), à section annulaire, placé au centre du faisceau d'éléments chauffants (16) et dont la paroi intérieure délimite le puits central (20), la hauteur de ce caisson étant au plus égale à la hauteur des éléments chauffants qui en sont les plus proches et son épaisseur étant nettement supérieure à la dimension transversale des éléments comptée suivant un rayon du faisceau, de façon à éviter qu'une dépression soit créée à l'entrée des passages (28) du faisceau les plus proches du puits central.

2. Appareil selon la revendication 1 caractérisé en ce que les extrémités du caisson sont profilées pour améliorer l'écoulement de la masse en cours de cristallisation à l'entrée et à la sortie du puits central.

3. Appareil selon la revendication 1 ou 2, caractérisé en ce que ledit caisson (18) est chauffé de la même manière que les éléments chauffants du faisceau (16).

4. Appareil selon la revendication 1, 2 ou 3, caractérisé en ce que les éléments chauffants (16) sont constitués par des corps annulaires, à paroi creuse, disposés verticalement et concentriquement de telle sorte que leurs bords supérieurs soient situés à des niveaux décroissant de la périphérie vers le centre du faisceau, et en ce que la dénivellation h entre le bord supérieur de l'élément chauffant extérieur et celui de l'élément chauffant intérieur est comprise entre 0,2 D^{2/3} et D^{2/3}, D étant le diamètre du puits central et D et h étant exprimés en mètres.

## Claims

1. Evaporation crystallizer comprising a vertical-axis closed vessel, a heating element calandria arranged in the lower part of the vessel and provided with passages (28) for the upward circulation of the product in the process of being crystallized, and an agitator placed at the foot of a central downtake provided in the calandria, characterized in that it comprises a hollow ring-shaped box (18), placed at the centre of the heating element calandria (16) and the inner wall of which bounds the central downtake (20), the height of the said box being at the most equal to the height of the nearest heating elements to the same and its thickness being markedly in excess of the transverse dimension of the elements counted along a radius of the calandria, so as to prevent the formation of a negative pression at the mouth of the nearest passages (28) of the calandria to the central downtake.

2. Apparatus according to claim 1, characterized in that the ends of the box are streamlined in order to improve the flow of the mass in the process of being crystallized at the inlet and the outlet of the downtake.

3. Apparatus according to claim 1 or 2, characterized in that the said box (18) is heated in the same way as the heating elements of the calandria (16).

4. Apparatus according to claim 1, 2 or 3, characterized in that the heating elements (16) consist of hollow-wall ring-shaped bodies arranged vertically and concentrically in such a way that their upper edges are situated at decreasing levels from the periphery toward the centre of the calandria, and in that the difference in level, h, between the top edge of the outer heating element and that of the inner heating element ranges between 0.2 D^{2/3} and D^{2/3}, where D is the diameter of the central downtake and h and D are expressed in meters.

## Patentansprüche

1. Verdampfungskristallisator bestehend aus einem geschlossenen Gefäß mit vertikaler Achse, einer im unteren Teil des Gefäßes angeordneten Heizkammer mit Heizkörpern und Durchgängen (28) zur steigenden Strömung des Kristallisationsgutes und einem unten an einem in der Heizkammer vorgesehenen zentralen Leitrohr angeordneten Rührwerk, dadurch gekennzeichnet, daß er einen in der Mitte der Heizkammer mit Heizkörpern (16) angeordneten hohlen Kasten (18) mit ringförmigem Querschnitt umfaßt, dessen Innenwand das zentrale Leitrohr (20) abgrenzt, wobei die Höhe dieses Kastens höchstens gleich der Höhe der nächstliegenden Heizkörper ist und die Dicke bedeutend größer als die Querabmessung der Körper in einem Radius der Heizkammer betrachtet, um zu vermeiden, daß am Eintritt der dem zentralen Leitrohr nächstliegenden Durchgänge (28) der Heizkammer ein Unterdruck erzeugt wird.

2. Apparat gemäß Anspruch 1, dadurch gekennzeichnet, daß die Enden des Kastens profiliert sind, um die Strömung der kristallisierenden Masse am Eintritt und am Austritt des zentralen Leitrohres zu verbessern.

3. Apparat gemäß Anspruch 1 oder 2, dadurch gekennzeichnet, daß besagter Kasten (18) auf dieselbe Art geheizt wird wie die Heizkörper (16) der Heizkammer.

4. Apparat gemäß Anspruch 1, 2 oder 3, dadurch gekennzeichnet, daß die Heizkörper (16) aus ringförmigen hohlwandigen Körpern bestehen, die vertikal und konzentrisch angeordnet sind, sodaß ihre Oberkanten auf vom Umfang zur Mitte der Heizkammer hin abnehmenden Höhen angeordnet sind, und daß der Höhenunterschied h zwischen der Oberkante des äußeren Heizkörpers und der des inneren Heizkörpers zwischen 0,2 D^{2/3} und D^{2/3} liegt, wobei D der Durchmesser des zentralen Leitrohres ist und D und h in Metern ausgedrückt werden.
